# EUROPÄISCHE PATENTSCHRIFT

(11) **EP 4 244 014 B1**
(45) Veröffentlichungstag und Bekanntmachung des Hinweises auf die Patenterteilung: **06.11.2024**
(21) Anmeldenummer: 21811318.1
(22) Anmeldetag: 12.11.2021
(51) Int. Cl.: B23K 9/29

(54) **ELEKTRODENSPANNVORRICHTUNG**
ELECTRODE CLAMPING DEVICE
DISPOSITIF DE SERRAGE D'ÉLECTRODE

(30) Priorität: 13.11.2020 EP 20207582
(43) Veröffentlichungstag der Anmeldung: 20.09.2023
(73) Patentinhaber: FRONIUS INTERNATIONAL GmbH, 4643 Pettenbach (AT)
(72) Erfinder: OBERNDORFER, Klaus, 4643 Pettenbach (AT); WIMROITHER, Helmut, 4643 Pettenbach (AT); PREUNDLER, Anton, 4643 Pettenbach (AT)
(74) Vertreter: Bratovic, Nino Maria
(86) Internationale Anmeldenummer: PCT/EP2021/081595
(87) Internationale Veröffentlichungsnummer: WO 2022/101448

(56) Entgegenhaltungen:
- JP-A- 2001 129 666
- US-A- 2 798 145
- US-A- 3 309 492
- US-A- 3 510 622
- US-A- 3 548 143

## Beschreibung

Die Erfindung betrifft eine Elektrodenspannvorrichtung zum mechanischen Einspannen einer nicht abschmelzbaren stabförmigen Schweißelektrode in einem Schweißbrenner.

Bei Lichtbogenschweißverfahren können nicht abschmelzbare Schweißelektroden eingesetzt werden. Diese nicht abschmelzbaren Schweißelektroden umfassen beispielsweise Wolframelektroden für WIG-Hochleistungsschweißen. Bei derartigen Lichtbogenschweißverfahren brennt ein Lichtbogen zwischen der nicht abschmelzbaren Schweißelektrode und einem Werkstück. Der Lichtbogen und die Schweißzone werden dabei üblicherweise durch einen Mantel aus inertem Gas oder einem Gasgemisch mit aktiven Bestandteilen geschützt. Herkömmliche Schweißbrenner weisen eine Schweißelektrode fixierendes Stromkontaktelement auf, das ein Klemmelement für die nicht abschmelzbare Schwei-βelektrode aufweist. Weiterhin verfügt ein herkömmlicher Schweißbrenner üblicherweise über eine Schutzgasdüse, welche das Stromkontaktelement und die nicht abschmelzbare Schwei-βelektrode umschließt. Ferner kann ein Schweißzusatzwerkstoff zugeführt werden, von welchem ein Materialübertrag auf das zu schweißende Werkstück erfolgt. Während des Schweißprozesses wird der sich zwischen der Schweißelektrode und dem Werkstück ausbildende Lichtbogen von einer Energiequelle gespeist.

Die nicht abschmelzbare Schweißelektrode wird bei herkömmlichen Schweißbrennern (siehe die US 2 798 145) durch einen Elektrodenhalter fixiert, beispielsweise eingeschraubt.

Ein derartiger herkömmlicher Schweißelektrodenhalter für einen Schweißbrenner hat allerdings den Nachteil, dass die nicht abschmelzbare Schweißelektrode entweder überhaupt nicht oder nur mit erheblichem technischen Aufwand austauschbar ist oder gewartet, wie beispielsweise geschliffen werden kann. Weiterhin ist die innerhalb des Elektrodenhalters befestigte Schweißelektrode in Längsrichtung nicht einfach verschiebbar. Demzufolge ist es auch nicht in einfacher Weise möglich einzustellen, wie weit die Elektrodenspitze der Schweißelektrode aus dem jeweiligen Schweißbrenner hervorsteht.

Darüber hinaus können bei herkömmlichen Elektrodenhaltern Materialdehnungen, die aufgrund von Schweißzyklen während des Schweißprozesses entstehen, von dem Elektrodenhalter nicht aufgenommen werden, sodass sich die Spannkraft zum Halten der Schweißelektrode im Laufe der Zeit vermindert. Das hat zur Folge, dass der Nutzer bzw. der Schweißer die Spannkraft beim Einspannen der stabförmigen Schweißelektrode in gewissen Zeitabständen wieder nachjustieren muss. Darüber hinaus können die auftretenden Materialdehnungen zu Beschädigungen der Spannhülse des Elektrodenhalters führen.

Es ist daher eine Aufgabe der vorliegenden Erfindung, eine Elektrodenspannvorrichtung zum mechanischen Einspannen einer nicht abschmelzbaren stabförmigen Schweißelektrode in einem Schweißbrenner zu schaffen, welche die oben genannten Nachteile vermeidet und welche insbesondere keine Nachjustierung aufgrund von Materialdehnungen erfordert.

Diese Aufgabe wird erfindungsgemäß durch eine Elektrodenspannvorrichtung mit den in Patentanspruch 1 angegebenen Merkmalen gelöst.

Die Erfindung schafft demnach eine Elektrodenspannvorrichtung zur mechanischen Einspannung einer nicht abschmelzbaren stabförmigen Schweißelektrode in einem Schweißbrenner, wobei die Elektrodenspannvorrichtung eine Spannzange aufweist, welche in den Schweißbrenner von hinten in ein die Spannzange umschließendes Spannzangengehäuse der Elektrodenspannvorrichtung montiert ist, wobei die Spannzange relativ zu dem sie umschließenden Spannzangengehäuse zum mechanischen Festklemmen und Lösen der stabförmigen Schweißelektrode entlang der Längsachse der stabförmigen Schweißelektrode beweglich angeordnet ist.

Das Lösen der stabförmigen Schweißelektrode erfolgt, um die Schweißelektrode entweder zu entfernen oder eine neue Schwei-βelektrode in die Elektrodenspannvorrichtung einzuführen oder um die Position der Schweiß-elektrode im Schweißbrenner zu verändern oder um die Schweiß-elektrode z.B. zu schleifen.

In einer möglichen Ausführungsform der erfindungsgemäßen Elektrodenspannvorrichtung weist die Spannzange in Längsrichtung ein vorderes Spannzangenende mit Spannbacken und ein hinteres Spannzangenende auf. Das Spannzangengehäuse weist in Längsrichtung ein vorderes Spannzangengehäuseende auf, beispielsweise mit einer Klemmfläche im Bereich des vorderen Spannzangengehäuseendes zum Klemmen der Spannzange mittels der Klemmfläche in dem Spannzangengehäuse, und ein hinteres Spannzangengehäuseende auf zum Ein- und Durchführen des vorderen Spannzangenendes in das hintere Spannzangengehäuseende. Die Spannzange ist durch das Spannzangengehäuse hindurchführbar und mit ihren Spannbacken aus dessen vorderen Spannzangengehäuseende herausführbar und mittels der Klemmfläche des Spanngehäuses klemmbar ist. Die Spannzange weist vorzugsweise eine Stromaufnahmekontaktfläche auf zum Kontaktieren und zum zentrierten Halten einer in der Spannzange aufnehmbaren Schweißelektrode, insbesondere einer stabförmigen Schwei-βelektrode. Die Spannzange weist an ihrem vorderen Spannzangenende vorzugsweise eine zusätzlich Schweißelektroden-Aufnahmekontur auf zum Aufnehmen einer stabförmigen Schwei-βelektrode in der Spannzange und insbesondere eines stumpfen Endes einer stabförmigen Schweißelektrode. Zusätzlich oder alternativ weist das die Spannzange umschließende Spannzangengehäuse vorzugsweise wenigstens eine Aufnahmekontur auf, derart dass die Spannzange von hinten durch die wenigstens eine Aufnahmekontur des Spannzangengehäuses ein- und durchschiebbar ist.

Bei einer möglichen Ausführungsform der erfindungsgemäßen Elektrodenspannvorrichtung weist die Spannzange an ihrem vorderen Endabschnitt mehrere radial angeordnete und durch Schlitze getrennte sowie sich radial und/oder axial verbreiternde Spannbacken auf.

Bei einer möglichen Ausführungsform der erfindungsgemäßen Elektrodenspannvorrichtung werden die Spannbacken der Spannzange durch eine innenliegende Klemm- und Stromkontaktfläche des umschließenden Spannzangengehäuses zum zentrierten Halten der in die Spannzange eingeführten stabförmigen Schweißelektrode zusammengepresst, sobald die Spannzange relativ zu dem sie umschließenden Spannzangengehäuse in dem Schweißbrenner nach hinten bewegt wird.

Bei einer weiteren möglichen Ausführungsform der erfindungsgemäßen Elektrodenspannvorrichtung wird die Spannzange relativ zu dem sie umschließenden Spannzangengehäuse durch einen Federmechanismus der Elektrodenspannvorrichtung bewegt.

Bei einer weiteren möglichen Ausführungsform der erfindungsgemäßen Elektrodenspannvorrichtung weisen die Spannbacken der Spannzange jeweils Flachfräsungen zur Spannkraftoptimierung auf. Darüber hinaus kann hierdurch der Stromübergang verbessert werden.

Bei einer weiteren möglichen Ausführungsform der erfindungsgemäßen Elektrodenspannvorrichtung weisen die an dem vorderen Endabschnitt der Spannzange vorgesehenen sich radial und/oder axial verbreiternden Spannbacken der Spannzange einen vorgegebenen ersten Öffnungswinkel auf.

Bei einer weiteren möglichen Ausführungsform der erfindungsgemäßen Elektrodenspannvorrichtung weist das Spannzangengehäuse an einem vorderen Endabschnitt eine Anpressfläche mit einem zweiten Öffnungswinkel auf.

Bei einer weiteren möglichen Ausführungsform der erfindungsgemäßen Elektrodenspannvorrichtung ist der erste Öffnungswinkel der Spannzange größer als oder gleich wie der zweite Öffnungswinkel des umschließenden Spannzangengehäuses.

Bei einer möglichen Ausführungsform der erfindungsgemäßen Elektrodenspannvorrichtung liegt der erste Öffnungswinkel der Spannzange in einem Winkelbereich von 20 bis 120°, insbesondere in einem Winkelbereich von 35° bis 75°, und beträgt vorzugsweise 70°.

Bei einer weiteren möglichen Ausführungsform der erfindungsgemäßen Elektrodenspannvorrichtung liegt der zweite Öffnungswinkel des Spannzangengehäuses in einem Winkelbereich von 0 bis 120°, insbesondere in einem Winkelbereich von 0 bis 80° und beträgt vorzugsweise 70°.

Bei einer weiteren möglichen Ausführungsform der erfindungsgemäßen Elektrodenspannvorrichtung ist die entlang der Längsachse der stabförmigen Schweißelektrode beweglich angeordnete Spannzange mit einer an einer Rückseite des Schweißbrenners vorgesehenen manuell betätigbaren Druckkappe verbunden, welche den Federmechanismus der Elektrodenspannvorrichtung umschließt.

Bei einer weiteren möglichen Ausführungsform der erfindungsgemäßen Elektrodenspannvorrichtung weist das Spannzangengehäuse Radialbohrungen auf, durch welche ein dem Schweißbrenner zugeführtes Schutzgas in eine die Schweißelektrode umschließende Gasdüse abgegeben wird.

Bei einer weiteren möglichen Ausführungsform der erfindungsgemäßen Elektrodenspannvorrichtung weist die an dem vorderen Endabschnitt des Spannzangengehäuses vorgesehene Anpressfläche einen Radius auf, der in einem Bereich von 0 bis 1 mm liegt und vorzugsweise 0,1 mm beträgt.

Bei einer weiteren möglichen Ausführungsform der erfindungsgemäßen Elektrodenspannvorrichtung ist die Oberfläche der Spannzange und/oder des Spannzangengehäuses durch eine stromleitende Oxidationsschutzschicht zum Schutz vor Oxidation und/oder zum Schutz vor Verschleiß bei Benutzung, insbesondere beim Verschieben der Spannzange gegenüber dem Spannzangengehäuse, umschlossen.

Bei einer möglichen Ausführungsform der erfindungsgemäßen Elektrodenspannvorrichtung besteht die stromleitende Oxidationsschutzschicht aus Silber oder Nickel oder weist eine Hochtemperatur-Gleitlackbeschichtung auf.

Bei einer weiteren möglichen Ausführungsform der erfindungsgemäßen Elektrodenspannvorrichtung besteht das Material der Spannzange aus einer Kupferlegierung.

Bei einer weiteren möglichen Ausführungsform der erfindungsgemäßen Elektrodenspannvorrichtung sind an einem Gehäuse des Schweißbrenners Zusatzkomponenten, insbesondere eine Kaltdraht- oder Heißdrahtzuführeinheit, montierbar.

Bei einer weiteren möglichen Ausführungsform der erfindungsgemäßen Elektrodenspannvorrichtung sind eine erste Stromkontaktfläche zwischen der stabförmigen Schweißelektrode und der Spannzange und eine zweite Stromkontaktfläche zwischen der Spannzange und dem Spannzangengehäuse axial zueinander versetzt angeordnet.

Bei einer weiteren möglichen Ausführungsform der erfindungsgemäßen Elektrodenspannvorrichtung weisen die Schlitze der Spannzange eine Schlitzlänge von 10 bis 20 mm, vorzugsweise 14 mm, auf.

Im Weiteren werden mögliche Ausführungsformen der erfindungsgemäßen Elektrodenspannvorrichtung unter Bezugnahme auf die beigefügten Figuren näher erläutert.

Es zeigen:
- Fig. 1: eine Schnittansicht durch eine mögliche Ausführungsform des Schweißbrenners mit einer erfindungsgemäßen Elektrodenspannvorrichtung;
- Fig. 2: eine Ansicht zur Erläuterung einer Montage einer erfindungsgemäßen Elektrodenspannvorrichtung in einen Schweißbrenner;
- Fig. 3: eine Ansicht auf ein mögliches Ausführungsbeispiel einer Spannzange einer erfindungsgemäßen Elektrodenspannvorrichtung;
- Fig. 4A, 4B: Schnittansichten zur Erläuterung möglicher Ausführungsvarianten einer erfindungsgemäßen Elektrodenspannvorrichtung;
- Fig. 4C: ein vergrößerter Ausschnitt der Ausführungsvariante einer erfindungsgemäßen Elektrodenspannvorrichtung gemäß Fig. 4A;
- Fig. 5: eine Vorderansicht auf eine erfindungsgemäße Elektrodenspannvorrichtung mit eingespannter nicht abschmelzbarer Schweißelektrode;
- Fig. 6A: eine Schnittansicht der Ausführungsvariante der erfindungsgemäßen Elektrodenspannvorrichtung gemäß Fig. 4A und 4C, wobei die Spannzange mit ihrem vorderen Spannzangenende in Richtung des vorderen Spannzangengehäuseendes bewegt ist;
- Fig. 6B: eine Schnittansicht der Elektrodenspannvorrichtung gemäß Fig. 6A, wobei die Spannzange mit ihrem vorderen Spannzangenende den kleinsten Innendurchmesser des Spannzangengehäuses erreicht hat;
- Fig. 6C: eine Schnittansicht der Elektrodenspannvorrichtung gemäß Fig. 6A und 6B, wobei die Spannzange mit ihrem vorderen Spannzangenende den kleinsten Innendurchmesser des Spannzangengehäuses passiert hat und sich in einer Spann-Position befindet;
- Fig. 6D: die Schnittansicht der Elektrodenspannvorrichtung gemäß Fig. 6C, wobei eine stabförmige Schweißelektrode in der Spannzange in deren Spann-Position eingespannt dargestellt ist; und
- Fig. 7: ein Ausschnitt eines weiteren Ausführungsbeispiels des Schweißbrenners 1 in einer Schnittansicht.

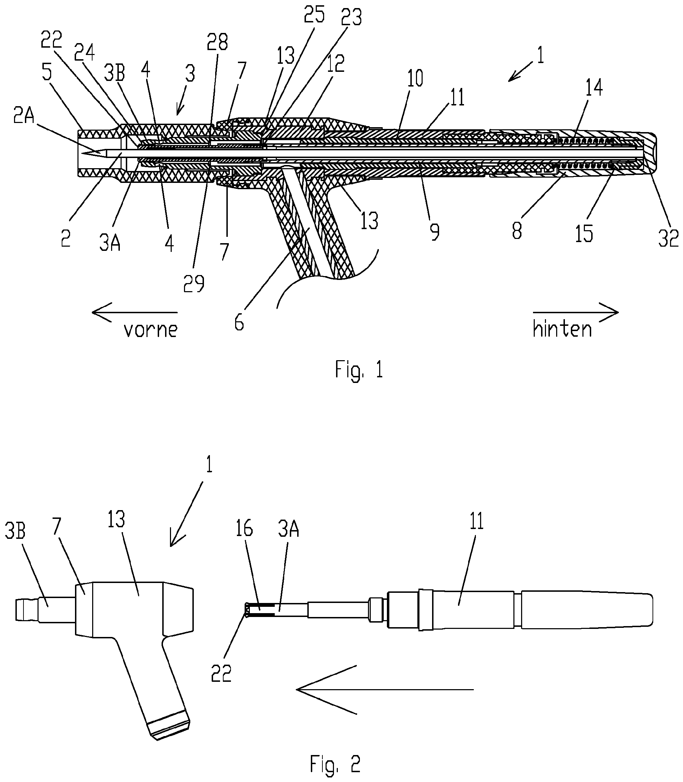

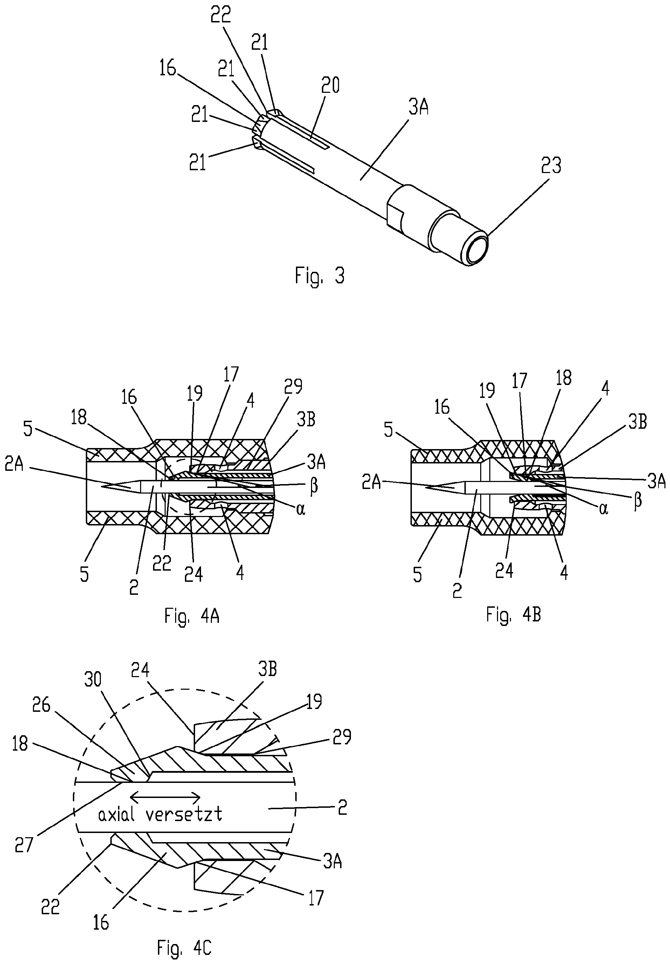

Fig. 1 zeigt eine Schnittansicht durch ein Ausführungsbeispiel einer erfindungsgemäßen Elektrodenspannvorrichtung 3 zum mechanischen Einspannen einer nicht abschmelzbaren stabförmigen Schweißelektrode 2 in einen Schweißbrenner 1. Figuren 4A, 4B zeigen weitere Schnittansichten zur Darstellung bevorzugter Ausführungsformen der erfindungsgemäßen Elektrodenspannvorrichtung 3.

Fig. 1 zeigt einen Schweißbrenner 1 mit einer erfindungsgemäßen Elektrodenspannvorrichtung 3 zum mechanischen Einspannen einer nicht abschmelzbaren stabförmigen Schweißelektrode 2 in den Schweißbrenner 1. In Fig. 1 ist auf der linken vorderen Seite des Schweißbrenners 1 eine Spitze 2A der stabförmigen Schweißelektrode 2 erkennbar. Die Elektrodenspannvorrichtung 3 weist eine Spannzange 3A auf, welche in den Schweißbrenner 1 von hinten, d.h. in Fig. 1 von rechts, in ein die Spannzange 3A umschließendes Spannzangengehäuse 3B der Elektrodenspannvorrichtung 3 montiert ist.

Die Spannzange 3A weist ein vorderes Spannzangenende 22 mit einem vorderen Endabschnitt mit Spannbacken 16 und ein hinteres Spannzangenende 23 auf. Des Weiteren weist das Spannzangengehäuse 3B ein vorderes Spannzangengehäuseende 24 und ein hinteres Spannzangengehäuseende 25 auf.

Wie in Fig. 1 gezeigt ist, ist die Spannzange 3A mit ihrem vorderen Spannzangenende 22 und den Spannbacken 16 von hinten in das hintere Spannzangengehäuseende 25 des Spannzangengehäuses 3B einschiebbar oder bewegbar. Die Spannzange 3A ist dabei mit ihrem vorderen Spannzangenende 22 und ihren Spannbacken 16 durch das vordere Spannzangengehäuseende 24 herausschiebbar oder bewegbar.

Es bestehen zwei mögliche Vorgehensweisen, die zum Ergebnis führen, dass die Spannzange 3A von hinten in das Spannzangengehäuse 3B montiert ist.

Bei der ersten Vorgehensweise befindet sich das Spannzangengehäuse 3B in dem Schweißbrenner und die Spannzange 3A wird dann eingeführt. Dabei wird die Spannzange 3A mit ihrem vorderen Spannzangenende 22 und den Spannbacken 16 von hinten in das hintere Spannzangengehäuseende 25 des Spannzangengehäuses 3B eingeschoben oder bewegt.

Bei der zweiten Vorgehensweise befindet sich die Spannzange 3A in dem Schweißbrenner und das Spannzangengehäuse 3B wird von vorne eingeführt und aufgeschraubt. Dabei wird das Spannzangengehäuse 3B mit seinem hinteren Spannzangengehäuseende 25 auf das vordere Spannzangenende 22 der Spannzange 3A aufgeschoben oder bewegt und somit die Spannzange 3A mit ihrem vorderen Spannzangenende 22 in das hintere Spannzangengehäuseende 25 eingeführt oder bewegt. Die Spannzange 3A ist relativ zu dem sie umschließenden Spannzangengehäuse 3B zum mechanischen Festklemmen oder Lösen der stabförmigen Schwei-βelektrode 2 entlang der Längsachse der stabförmigen Schwei-βelektrode 2 beweglich angeordnet. Wie man in Fig. 1 erkennen kann, weist das Spannzangengehäuse 3B Radialbohrungen 4 auf, durch welche ein dem Schweißbrenner 1 zugeführtes Schutzgas in eine die Schweißelektrode 2 umschließende Gasdüse 5 abgegeben wird. Das Schutzgas wird dem Schweißbrenner 1 über ein Schlauchpaket über Versorgungsleitungen 6 zugeführt. Der Schweißbrenner 1 besitzt einen Isolierring 7 zur elektrischen und thermischen Isolation des Schweißbrenners 1. Die entlang der Längsachse der stabförmigen Schweißelektrode 2 beweglich angeordnete Spannzange 3A ist mit einer an einer Rückseite des Schweißbrenners 1 vorgesehenen manuell betätigbaren Druckkappe 8 verbunden, wie in Fig. 1 dargestellt. Bei der in Fig. 1 dargestellten Ausführungsform umschließt die Druckkappe 8 einen Federmechanismus zum Bewegen der Spannzange 3A relativ zu dem sie umschließenden Spannzangengehäuse 3B. Die Schweißelektrode 2 befindet sich in einem Innenzylinder 9 des Schweißbrenners 1, welcher die Schweißelektrode 2 umschließt, wie in der Schnittansicht gemäß Fig. 1 dargestellt. Der Schweißbrenner 1 weist weiterhin einen Außenzylinder 10 auf, der von einem Mantel 11 umschlossen ist. Weiterhin hat der Schweißbrenner 1 ein Aufnahmegehäuse 12, das in einen Gummimantel 13 eingebettet ist. Bei dem in Fig. 1 dargestellten Ausführungsbeispiel weist der Federmechanismus eine Druckfeder 14 auf, die an der Rückseite an einem Federanschlag 15 anliegt. Die Druckkappe 8 umschließt die Feder 14 und den Federanschlag 15. Die Spannzange 3A kann beim Zusammenbau von hinten durch eine Klemmkontur geschoben werden, wie auch in Fig. 2 dargestellt. Ein umständliches Verschrauben der Schweißelektrode 2 in den Schweißbrenner 1 von vorne wird auf diese Weise vermieden.

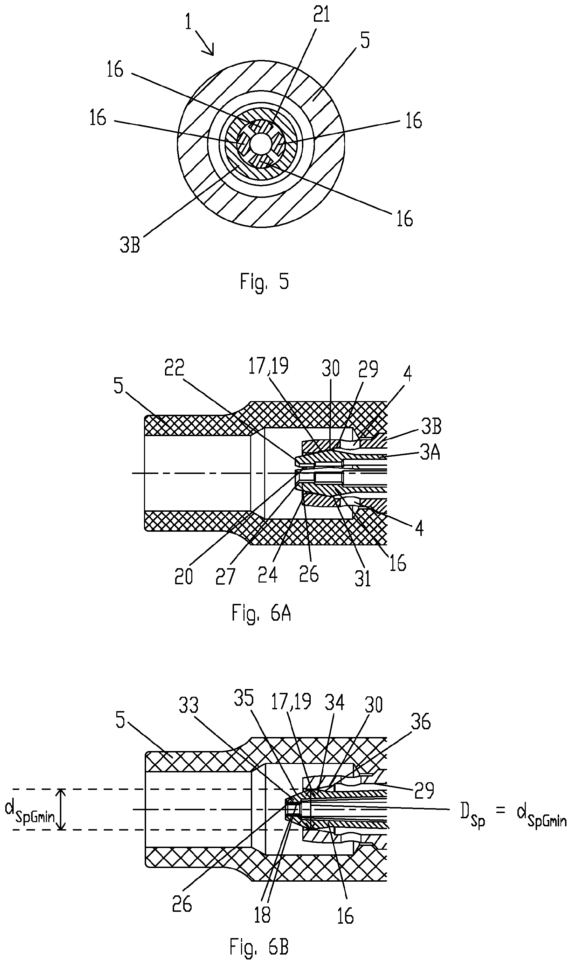

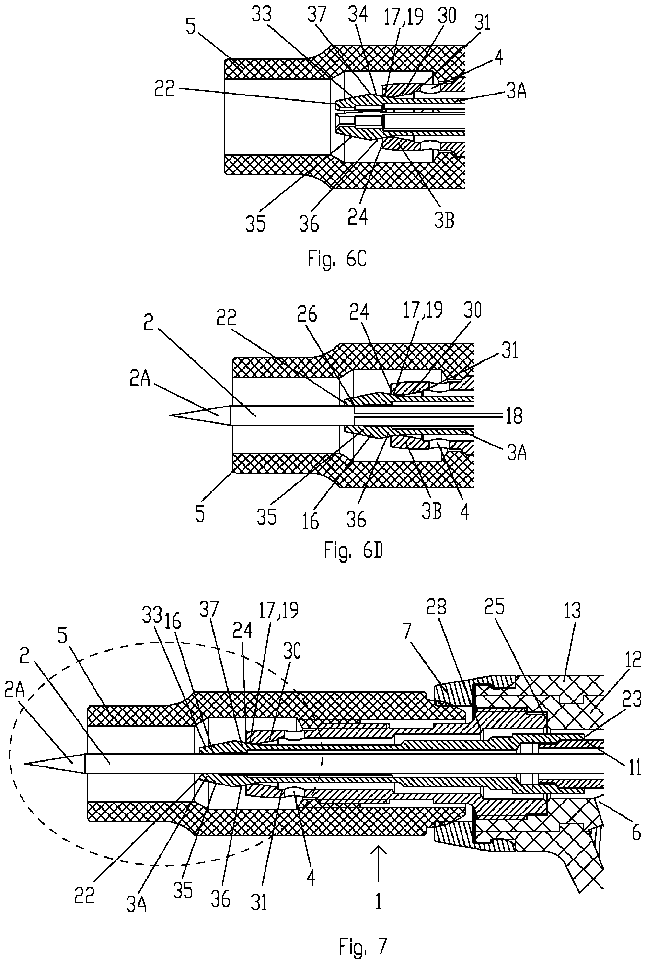

Die Figuren 4A, 4B, 4C sowie die nachfolgenden Fig. 6A, 6B, 6C und 6D zeigen Detailansichten des vorderen Abschnittes des Schweißbrenners 1. Figuren 4A, 4B zeigen zwei alternative Ausführungsformen der erfindungsgemäßen Elektrodenspannvorrichtung 3, wobei Fig. 4C einen vergrößerten Ausschnitt der Ausführungsvariante der erfindungsgemäßen Elektrodenspannvorrichtung gemäß Fig. 4A zeigt. Die Ausführungsformen der Spannzangen 3A, wie sie in den Fig. 3, 4A, 4B, 4C und 6A-6d gezeigt sind können in den Schweißbrenner 1 eingesetzt werden. Man erkennt in den Figuren 4A, 4B, 4C die Spannzange 3A, welche von dem Spannzangengehäuse 3B umschlossen wird. Wie man in den Figuren 4A, 4B, 4C sowie den nachfolgenden Fig. 6A-6D erkennen kann, weist die Spannzange 3A an ihrem vorderen Endabschnitt mehrere durch Schlitze 20 getrennte Spannbacken 16 auf. Diese werden durch eine innenliegende Klemmfläche 17 des umschließenden Spannzangengehäuses 3B zum zentrierten Halten der in die Spannzange 3A eingeführten stabförmigen Schweißelektrode 2 zusammengepresst, sobald die Spannzange 3A relativ zu dem sie umschließenden Spannzangengehäuse 3B in dem Schweißbrenner 1 nach hinten bewegt wird.

Figuren 4A, 4B, 4C sowie die nachfolgende Fig. 6D zeigen die Schweißelektrode 2 im eingespannten Zustand, d.h. in einem Zustand, bei dem die Spannbacken 16 der Spannzange 3A durch die Klemm- und Stromkontaktflächen des umschließenden Spannzangengehäuses 3B zusammengepresst sind. Durch manuelles Betätigen der an dem Schweißbrenner 1 hinten vorgesehenen Druckkappe 8, welche die Druckfeder 14 umschließt, kann die Spannzange 3A relativ zu dem sie umgreifenden Spannzangengehäuse 3B nach vorne gedrückt werden, sodass sich die von der Klemmkontaktfläche 17 ausgeübte Spannkraft aufgrund der Form der Spannbacken 16 vermindert. Hierdurch wird die Haltekraft zum zentrierten Halten der Schweißelektrode 2 so weit abgesenkt, dass die Schweißelektrode 2 von vorne aus dem Schweißbrenner 1 in einfacher Weise herausgeführt werden kann, solange die Druckkappe 8 gepresst bleibt. Auf diese Weise ist es möglich, entweder eine Schweißelektrode 2 durch eine neue Schweißelektrode zu ersetzen oder einzustellen, inwieweit die Spitze 2A der Schweißelektrode 2 aus dem Schweißbrenner 1 hervorragt. Das Material der Spannzange 3A kann bei einer möglichen Ausführungsform aus einer Kupferlegierung, insbesondere einer harten Kupferlegierung, bestehen. Zudem kann die Oberfläche der Spannzange 3A und/oder des Spannzangengehäuses 3B durch eine stromleitende Oxidationsschutzschicht zum Schutz vor Oxidation umschlossen sein. Diese stromleitende Oxidationsschutzschicht besteht bei einer möglichen Ausführungsform aus Silber oder Nickel. Weiterhin kann die stromleitende Oxidationsschutzschicht auch eine Hochtemperatur-Gleitlackbeschichtung aufweisen. Zwischen der stabförmigen Schweißelektrode 2 und der Spannzange 3A besteht eine erste Stromkontaktfläche 18, wie in den Figuren 4A, 4B, 4C und den nachfolgenden Fig. 6A-6D dargestellt. Die mechanische Klemmfläche 17, welche zum Festklemmen der Spannzange 3A durch das umschließende Spannzangengehäuse 3B vorgesehen ist, bildet eine zweite Stromkontaktfläche 19 aus. Wie man in den Figuren 4A, 4B, 4C und den nachfolgenden Fig. 6A-6D erkennen kann, sind die erste Stromkontaktfläche 18 zwischen der stabförmigen Schweißelektrode 2 und der Spannzange 3A und die zweite Stromkontaktfläche 19 zwischen der Spannzange 3A und dem Spannzangengehäuse 3B entlang der Längsachse zueinander axial versetzt angeordnet. Hierdurch wird verhindert, dass bei hohen elektrischen Strömen ein ungewolltes Verkleben der Spannzange 3A mit dem Spannzangengehäuse 3B erfolgt. Dies ist insbesondere bei hohen Schweißleistungen erforderlich. Durch die versetzte Anordnung der Stromkontaktflächen 18, 19 wird zudem eine zusätzliche mechanische Federwirkung erzielt. Auf diese Weise können Wärmeausdehnungen der Bauteile bzw. Komponenten, die insbesondere bei hohen Schweißleistungen verstärkt auftreten, aufgenommen bzw. ausgeglichen werden. Die Spannzange 3A und das umschließende Spannzangengehäuse 3B liegen vorzugsweise dicht aufeinander, wobei das Spannzangengehäuse 3B im Kontaktbereich einen Radius aufweist. Hierdurch kann gewissermaßen ein Abdruck des Spannzangengehäuses 3B in die umschlossene Spannzange 3A verhindert werden, insbesondere bei hohen Stromleistungen oder bei vielen Betätigungsvorgängen zum Spannen, Lösen bzw. Einrichten der Schweißelektrode 2.

Der Federmechanismus kann alternativ auch durch einen gesteuerten Aktuator betätigt werden.

Fig. 2 zeigt die Montage bzw. den Zusammenbau eines Schweißbrenners 1. Wie man in Fig. 2 erkennen kann, wird die Spannzange 3A von hinten durch eine Aufnahmekontur des umschließenden Spannzangengehäuses 3B geschoben. Hierdurch kann ein umständliches Verschrauben von vorne entfallen. Dies führt zu einer Handhabungserleichterung.

Fig. 3 zeigt ein Ausführungsbeispiel einer Spannzange 3A der erfindungsgemäßen Elektrodenspannvorrichtung 3. Die Spannzange 3A weist das vordere Spannzangenende 22 mit dem vorderen Endabschnitt mit den Spannbacken 16 auf, welches in das hintere Spannzangengehäuseende 25 des Spannzangengehäuses 3B einführbar oder bewegbar ist. Die Spannzange 3A weist an ihrem vorderen Endabschnitt, d.h. im eingebauten Zustand nach vorne weisend, mehrere radial angeordnete durch Schlitze 20 voneinander getrennte Spannbacken 16 auf. Diese verbreitern sich bei dem in Fig. 3 dargestellten Ausführungsbeispiel vorne radial nach außen. Die in Fig. 3 dargestellte Spannzange 3A ist im eingebauten Zustand relativ zu dem sie umschließenden Spannzangengehäuse 3B beweglich angeordnet. Die Schlitze 20 der Spannzange 3A weisen bei einer möglichen Implementierung eine Schlitzlänge von 10 bis 20 mm, vorzugsweise 14 mm, auf. Bei der in Fig. 3 dargestellten Ausführungsform weisen die Spannbacken 16 zudem Flachfräsungen 21 zur Spannkraftoptimierung auf. Diese Flachfräsungen 21 sind auch auf der Vorderansicht gemäß Fig. 5 erkennbar. Wie in Fig. 5 erkennbar, wird die Schweißelektrode 2 beispielsweise durch vier gleichmäßig beabstandete Spannbacken 16 der Spannzange 3A zentriert gehalten. Die Anzahl der Spannbacken 16 kann variieren. Das Spannzangengehäuse 3B umschließt die Spannbacken 16 und presst diese gegen die zylindrische Oberfläche der Schwei-βelektrode 2, wie in Fig. 5 erkennbar. Die Spannbacken 16 weisen Flachfräsungen 21 auf, wie in Fig. 5 dargestellt. Aufgrund der Flachfräsungen 21 kann die Spannkraft, welche auf die Spannbacken 16 ausgeübt wird, erhöht werden. An einem vorderen Endabschnitt der Spannzange 3A sind sich radial verbreiternde Spannbacken 16 vorgesehen. Diese Spannbacken 16 weisen einen ersten Öffnungswinkel α auf, wie in den Figuren 4A, 4B, 4C und den nachfolgenden Fig. 6A-6D dargestellt. Das Spannzangengehäuse 3B weist an einem vorderen Endabschnitt eine Anpressfläche 17 mit einem zweiten Öffnungswinkel β auf, wie in den Figuren 4A, 4B, 4C und den nachfolgenden Fig. 6A-6D dargestellt. Der erste Öffnungswinkel α der Spannzange 3A ist dabei größer als der zweite Öffnungswinkel β des umschließenden Spannzangengehäuses 3B. Bei einer möglichen Ausführungsform liegt der erste Öffnungswinkel α der sich verbreiternden Spannbacken 16 in einem Winkelbereich von 20 bis 50°. Bei einer möglichen Ausführungsform beträgt der erste Öffnungswinkel α 35°. Der zweite Öffnungswinkel β der Anpressfläche 17 am vorderen Endabschnitt des Spannzangengehäuses 3B liegt vorzugsweise in einem Winkelbereich von 0 bis 50°. Der zweite Öffnungswinkel β beträgt bei einer möglichen Ausführungsform 30°. Bei einer möglichen Ausführungsform weist zudem die an dem vorderen Endabschnitt des Spannzangengehäuses 3B vorgesehene Anpressfläche 17 einen Radius auf Dieser kann beispielsweise in einem Bereich von 0 bis 1 mm und beträgt vorzugsweise 0,1 mm.

An dem in Fig. 1 dargestellten Gehäusemantel 11 des Schweißbrenners 1 können bei einer möglichen Ausführungsform weitere Zusatzkomponenten montiert werden. Diese umfassen beispielsweise eine Kaltdraht- oder Heißdrahtzuführeinheit. Das in Fig. 1 dargestellte WIG-Elektrodenspannsystem spannt die Schweißelektrode 2 mit einer integrierten Druckfeder 14 mithilfe einer Spannzange 3A und einem diese umschließenden Spannzangengehäuse 3B. Aufgrund der besonderen Geometrie der Spannzange 3A und des umschließenden Spannzangengehäuses 3B ist es möglich, die Spannkraft zu maximieren und gleichzeitig mögliche Materialausdehnungen, die während des Schweißprozesses auftreten, auszugleichen, sodass keine Nachjustierung erfolgen muss. Die besondere Anordnung der Stromkontaktflächen 18, 19, insbesondere deren axiale Versetzung zueinander entlang der Längsachse, erlaubt zudem, den Schweißprozess mit hohen Stromamplituden durchzuführen, ohne dass es zu ungewollten Verklebungen der Spannzange 3A mit dem Spannzangengehäuse 3B kommt. Durch die besondere Anordnung der Stromkontaktflächen 18, 19 wird ein stabiler und konstanter Stromübergang gewährleistet. Dies dient auch zur Stabilisierung des während des Schweißprozesses entstehenden Lichtbogens. Selbst bei hohen Stromstärken verschweißen die Spannzange 3A und das Spannzangengehäuse 3B nicht miteinander, wodurch ein zuverlässiges Spannen und Lösen der Schweißelektrode 2 gewährleistet wird. Das Elektrodenspannsystem bzw. die erfindungsgemäße Elektrodenspannvorrichtung 3 bieten zudem Platz zum Anbringen von Zusatzkomponenten an den Gehäusemantel 11 des Schweißbrenners 1. Die relative Lage der Stromkontaktflächen 18, 19 kann unterschiedlich sein. Bei dem in Fig. 4A, 4C und 6A-6D dargestellten Ausführungsbeispiel liegt die ringförmige durch Schlitze segmentierte erste Stromkontaktfläche 18 vor der ebenfalls ringförmigen segmentierten zweiten Stromkontaktfläche 19, d.h., die erste Stromkontaktfläche 18 liegt näher zu der Spitze 2A der Schweißelektrode 2. Bei dem in Fig. 4B dargestellten Ausführungsbeispiel verhält es sich umgekehrt, d.h., hier liegt die zweite ringförmige segmentierte Stromkontaktfläche 19 in Längsrichtung näher zu der Spitze 2A der Schweißelektrode 2. Die axiale Versetzung der Stromkontaktflächen 18, 19 kann in beiden Ausführungsbeispielen im Bereich von 0,5 mm bis 15 mm, vorzugsweise 3 mm bis 4 mm, liegen.

Die Fig. 6A, 6B, 6C und 6D zeigen Detailansichten des vorderen Abschnittes des Schweißbrenners 1, welcher z.B. ein Schweißbrenner 1 wie zuvor in Fig. 1 sowie Fig. 2 gezeigt und beschrieben ist, und des darin aufgenommenen Spannzangengehäuses 3B und der Spannzange 3A der Ausführungsvariante der erfindungsgemäßen Elektrodenspannvorrichtung gemäß Fig. 4A und 4C. Genauer zeigen die Fig. 6A-6D verschiedene Positionen der Spannzange 3A relativ zu dem Spannzangengehäuse 3B. Die Spannzange 3A und ihre Spannbacken 16 werden dabei durch das Spannzangengehäuse 3B in Richtung des vorderen Spannzangengehäuseendes 22 und aus dem Spannzangengehäuse 3B herausbewegt, wie in den Fig. 6A-6D gezeigt ist, bis die Spannzange 3A, wie in Fig. 6C und 6D, eine Spann-Position bzw. einen Spann-Zustand erreicht hat, in der sie eine Schweißelektrode 2 zentriert halten kann. Dabei korrespondiert Fig. 6D mit der montierten Schweißelektrode 2 zu den Fig. 4A und 4C.

Die Fig. 6A und 6B zeigen das Bewegen der Spannzange 3A mit ihre Spannbacken 16 nach vorne und durch den Bereich des Spannzangengehäuses 3B mit seiner Klemm- oder Anpressfläche 17, wobei die Spannzange 3A mit ihren Schlitzen 20 dabei durch das Spannzangengehäuse 3B zusammendrückt wird.

In den Fig. 6C und 6D ist die Spannzange 3A in der Spann-Position oder dem Spann-Zustand gezeigt, bei dem die Spannbacken 16 der Spannzange 3A durch die Klemm- oder Anpressfläche 17 und die zweite Stromkontaktfläche 19 des umschließenden Spannzangengehäuses 3B zusammengepresst sind. Die Spannzange 3A kontaktiert dabei mit ihrer ersten Stromkontaktfläche 18 eine in der Spannzange 3A aufgenommene, stabförmige Schwei-βelektrode 2 und hält diese zentriert, wie in Fig. 6D gezeigt. Die stabförmige Schweißelektrode 2 weist dabei an einem vorderen Ende die Spitze 2A und an dem hinteren Ende ein stumpfes Ende (32) auf.

In der Spann-Position bzw. Spann-Zustand, ist die Spannzange 3A, bei aufgenommener Schweißelektrode 2, wie in Fig. 6D gezeigt, nicht mehr ungewollt zurück bewegbar in Richtung des hinteren Spanzangengehäuseendes 25. Sie kann aber, wenn der Schweißbrenner 1, wie zuvor in Fig. 1 gezeigt montiert ist, weiter nach vorne bewegt werden durch Betätigen, hier z.B. Drücken, der Druckkappe 8 in Fig. 1. Durch Betätigen der in Fig. 1 gezeigten Druckkappe 8, kann die Spannzange 3A in den Fig. 6D relativ zu dem sie umgreifenden Spannzangengehäuse 3B nach vorne gedrückt werden, sodass sich die von der Klemmkontakt- oder Anpressfläche 17 ausgeübte Spannkraft aufgrund der Form der Spannbacken 16 vermindert. Hierdurch wird die Haltekraft zum zentrierten Halten der Schweißelektrode 2 so weit abgesenkt, dass die Schweißelektrode 2 von vorne aus dem Schweißbrenner 1 in einfacher Weise herausgeführt werden kann, solange die Druckkappe 8 betätigt, hier z.B. gepresst, bleibt. Dadurch kann z.B. eine Schweißelektrode 2 durch eine neue Schweißelektrode ersetzt oder das Herausragen der Spitze 2A der Schweißelektrode 2 aus dem Schweißbrenner 1 eingestellt werden.

Wie zuvor mit Bezug auf die Fig. 4A und 4C beschrieben wurde, weist die Spannzange 3A an ihrem vorderen Spannzangenende 22 und genauer ihrem vorderen Endabschnitt die mehreren durch Schlitze 20 getrennten Spannbacken 16 auf.

Zwischen der stabförmigen Schweißelektrode 2 und der Spannzange 3A in Fig. 6D und zuvor in den Fig. 4A und 4C besteht die erste Stromkontaktfläche 18. Genauer weist die Spannzange 3A und insbesondere deren durch die Schlitze 20 segmentierten Spannbacken 16 an ihrer Innenseite einen Vorsprung 26 auf, der die Stromkontaktfläche 18 der Spannzange 3A mit einer in der Spannzange 3A montierten stabförmigen Schweißelektrode 2 bereitstellt. An dem vorderen Spannzangenende 22 ist die Spannzange 3A vorzugsweise nach innen bis zu der Stromkontaktfläche 18 zusätzlich abgeschrägt zum Bereitstellen einer Schweißelektroden-Aufnahmekontur 27, und insbesondere einer sich konisch oder trichterförmig nach innen in Richtung des hinteren Spannzangenendes 23 verjüngenden Schweißelektroden-Aufnahmekontur. Die nach innen abgeschrägte oder sich nach innen konisch oder trichterförmig verjüngende Schweißelektroden-Aufnahmekontur 27 erleichtert das Einfädeln der stabförmigen Schweißelektrode 2 in das vordere Spannzangenende 22 der Spannzange 3A.

Das Spannzangengehäuse 3B weist denselben oder im Wesentlichen denselben Aufbau, wie das Spannzangengehäuse 3A in Fig. 1 auf, so dass auf die Beschreibung hierzu in Fig. 1 Bezug genommen wird, um unnötige Wiederholungen zu vermeiden. Wie zuvor das Spannzangengehäuse 3A in Fig. 1, weist das Spannzangengehäuse 3B ebenfalls vorzugsweise wenigstens eine erste Aufnahmekontur oder eine erste Spannzangen-Aufnahmekontur 28 auf, die das Einfädeln der Spannzange 3A innerhalb des Spannzangengehäuses 3B erleichtert. Das Spannzangengehäuse 3B, weist, wie das Spannzangengehäuse 3A zuvor in Fig. 1, eine Durchgangsöffnung 29, insbesondere eine abgestufte Durchgangsbohrung, in Längsrichtung auf, deren Durchmesser von dem hinteren Spannzangengehäuseende 25 zu dem vorderen Spannzangengehäuseende 24 abnimmt, insbesondere stufenweise abnimmt. Wenigstens eine, mehrere oder alle dieser Stufen oder Abstufungen in dem Spannzangengehäuse 3B können zusätzlich abgeschrägt oder sich trichterförmig oder konisch verjüngend in Richtung des vorderen Spannzangengehäuseendes 24 ausgebildet sein, um so ein leichteres Einfädeln und Durchführen der Spannzange 3A durch das Spannzangengehäuse 3B zu ermöglichen, und so eine jeweilige Spannzangen-Aufnahmekontur 28, 30, 31 bereitstellen. Wie zuvor in Fig. 1 gezeigt ist, weist die Durchgangsöffnung 29, insbesondere abgestufte Durchgangsbohrung, eine erste Aufnahmekontur oder erste Spannzangenaufnahmekontur 28 und wenigstens eine zweite Aufnahmekontur oder zweite Spannzangen-Aufnahmekontur 30 auf. Die zweite Aufnahmekontur 30 verjüngt sich dabei zu der Stromkontaktfläche 18 hin, wie in den Fig. 6A-6D gezeigt ist. Davor kann optional eine dritte Aufnahmekontur 31 vorgesehen sein. Die jeweilige erste, zweite und dritte Spannzangen-Aufnahmekontur 28, 30, 31 sind abgeschrägt oder sich trichterförmig oder konisch verjüngend in Richtung des vorderen Spannzangengehäuseendes 24 in dem Spannzangengehäuse 3B und dessen Durchgangsöffnung 29, insbesondere Durchgangsbohrung, ausgebildet. Dadurch kann das Bewegen der Spannzange 3A durch die Durchgangsöffnung 29 des Spannzangengehäuses 3B erleichtert werden und die Spannzange 3A in der abgestuften Durchgangöffnung 29 leichter von dem hinteren Spannzangengehäuseende 25 zu dem vorderen Spannzangengehäuseende 24 hindurchgefädelt werden.

Die Durchgangsöffnung 29 weist dabei im Bereich des hinteren Spannzangengehäuseendes 25 den größten Innendurchmesser d_{SpGmax} und im Bereich der Klemm- oder Anpressfläche 17 den kleinsten Innendurchmesser d_{SpGmin} auf, wie in Fig. 1, 4A-4C und 6A-6D gezeigt ist.

Neben der ersten Stromkontaktfläche 18 der Spannzange 3A bildet, wie zuvor beschrieben, die mechanische Klemm- oder Anpressfläche 17 des Spannzangengehäuses 3B, welche zum Festklemmen der Spannzange 3A durch das umschließende Spannzangengehäuse 3B vorgesehen ist, die zweite Stromkontaktfläche 19 aus. Wie man zuvor in den Figuren 4A und 4C und den nachfolgenden Fig. 6C und 6D erkennen kann, sind die erste Stromkontaktfläche 18 zwischen der stabförmigen Schweißelektrode 2 und der Spannzange 3A und die zweite Stromkontaktfläche 19 zwischen der Spannzange 3A und dem Spannzangengehäuse 3B entlang der Längsachse oder in Längsrichtung zueinander axial versetzt angeordnet.

Bei dem in Fig. 4A, 4C und 6A-6D dargestellten Ausführungsbeispiel liegt die ringförmige, durch die Schlitze 20 segmentierte erste Stromkontaktfläche 18 vor der ebenfalls ringförmigen, durch die Schlitze 20 segmentierten zweiten Stromkontaktfläche 19. Mit andere Worten, die erste Stromkontaktfläche 18 liegt in axialer Richtung näher zu der Spitze 2A der Schweißelektrode 2 als die zweite Stromkontaktfläche 19.

Die Spannbacken 16 der Spannzange 3A weisen den ersten Öffnungswinkel α auf, wie zuvor in den Figuren 4A und 4C und den Fig. 6A-6D dargestellt ist. Das Spannzangengehäuse 3B weist wiederum an dem vorderen Endabschnitt die Klemm- oder Anpressfläche 17 mit dem zweiten Öffnungswinkel β auf, wie zuvor in den Figuren 4A, 4C und den nun in Fig. 6A-6D dargestellt.

Bei einer möglichen Ausführungsform, einschließlich der, wie sie in den Fig. 6A-6D gezeigt ist, kann zudem die an dem vorderen Endabschnitt des Spannzangengehäuses 3B vorgesehene Klemm- oder Anpressfläche 17 einen Radius aufweisen. Dieser Radius kann beispielsweise in einem Bereich von 0 bis 1 mm liegen und vorzugsweise 0,1 mm betragen.

In einer weiteren möglichen Ausführungsform, beispielsweise der in den Fig. 6A-6D, können der erste Öffnungswinkel α und der zweite Öffnungswinkel β statt verschieden auch gleich groß sein, wobei der erste und zweite Öffnungswinkel α und β dabei jeweils in einem Bereich von vorzugsweise 20° bis 50° liegen. Besonders bevorzugt beträgt der erste Öffnungswinkel α und der zweite Öffnungswinkel β jeweils 20°.

Bei der zuvor in den Fig. 4A und 4C und nun in den Fig. 6A-6D gezeigten Ausführungsform, weisen die durch die Schlitze 20 segmentierten Spannbacken 16 einen vorderen Spannbackenabschnitt 33 und einen hinteren Spannbackenabschnitt 34 auf.

Der vordere Spannbackenabschnitt 33 kann als durch die Schlitze 20 segmentierter, vorderer konische Abschnitt 35 ausgebildet sein, welcher sich zu dem vorderen Spannzangenende 22 hin konisch oder trichterförmig verjüngt. Der hintere Spannbackenabschnitt 34 bildet einen durch die Schlitze 20 segmentierten, hinteren konischen Abschnitt 36 mit dem erste Öffnungswinkel α von z.B. 20°. Der hintere konische Abschnitt 36 verjüngt sich dabei in Richtung des hinteren Spannzangenendes 23. Dazu korrespondierend weist das Spannzangengehäuse 3B an dem vorderen Endabschnitt die dazu korrespondierende Klemmkontakt- oder Anpressfläche 17 mit dem zweiten Öffnungswinkel β auf, der vorzugsweise gleich groß ist wie der erste Öffnungswinkel α, z.B. 20°.

Der vordere konische Abschnitt 35 der Spannbacken 16 in dem Ausführungsbeispiel in den Fig. 6A-6D und zuvor in den Fig. 4A und 4C hat den Vorteil, dass die Spannzange 3A leichter durch das Spannzangengehäuse 3B und insbesondere deren Bereich mit der Klemm- oder Anpressfläche 17, welcher den kleinsten Innendurchmesser d_{SpGmin} aufweist, hindurchgefädelt werden.

An dem Übergang, hier z.B. in Form einer Spitze 37 oder Plateaus (nicht dargestellt), zwischen dem vorderen konische Abschnitt 35 und dem hintere konischen Abschnitt 36 ist der Ausgangs-Außendurchmesser D_{SPmax} der Spannbacken 16 der Spannzange 3A am größten. Der Ausgangs-Außendurchmesser D_{SPmax} der Spannbacken 16 der Spannzange 3A liegt beispielsweise in einem Bereich von 4,8mm bis 5,8mm. Die Spannzange 3A mit ihren Spannbacken 16 muss daher, um durch den Bereich des Spannzangengehäuses 3B mit dem kleinsten Durchmesser d_{SpGmin} hindurchgeführt zu werden, wie in den Fig. 6A und 6B gezeigt, ausreichend zusammengedrückt werden und genauer auf diesen kleinsten Durchmesser d_{SpGmin.} Der kleinste Durchmesser d_{SpGmin} im Bereich der Klemm- oder Anpressfläche 17 des Spannzangengehäuses 3B liegt beispielsweise in einem Bereich von 4mm bis 5mm. Dem entsprechend muss die Spannzange 3A und genauer deren durch die Schlitze 20 segmentierte Spannbacken 16 derart ausgebildet sein, dass die Spannbacken 16 mit ihrem größter Ausgangs-Außendurchmesser D_{SPmax}, von beispielsweise 4,8 bis 5,8mmm, entsprechend auf die Größe des korrespondierenden kleinsten Durchmesser d_{SpGmin} des Spannzangengehäuses 3B zusamdrückbar oder zusammenpressbar sind.

Die Spannbacken 16 werden bei montierter Spannzange 3A in dem Spannzangengehäuse 3B durch die mechanische Klemm- oder Anpressfläche 17 des Spannzangengehäuses 3B geklemmt, wie in Fig. 6C und 6D gezeigt ist.

Beispielsweise kann die Spannzange 3A, wie zuvor in Fig. 5 gezeigt, vier Spannbacken 16 und entsprechend vier Schlitze 20 aufweisen. Um die durch die Schlitze 20 segmentieren Spannbacken 16 geeignet zusammenzupressen, kann beispielsweise eine geeignete Schlitzbreite der Schlitze gewählt werden.

Bei einem größten oder maximalem Ausgangs-Außendurchmesser D_{SPmax} der Spannbacken 16, beispielsweise in einem Bereich von 4,8mm bis 5,8mm, und bei beispielsweise drei oder, wie in Fig. 5 gezeigt, vier Spannbacken 16, kann die Schlitzbreite SB der Schlitze 20 beispielsweise zwischen den Spannbacken 16 in einem Bereich von 0,5mm bis 1mm und vorzugsweise in einem Bereich von 0,6 bis 0,8mm liegen, um die Spannbacken 16 geeignet zusammenzudrücken.

Die Elektrodenspannvorrichtung 3 stellt somit eine Spannzange 3A bereit, die in Längsrichtung ein vorderes Spannzangenende 22 mit Spannbacken 16 und ein hinteres Spannzangenende 23 aufweist (wie z.B. in den Fig. 1, 2, 3, 4a-4C, 5, 6A-6D und 7 gezeigt), und wobei das Spannzangengehäuse 3B in Längsrichtung ein vorderes Spannzangengehäuseende 24, insbesondere zum Klemmen der Spannzange 3A mittels einer Klemmfläche 17 in dem Spannzangengehäuse 3B, und ein hinteres Spannzangengehäuseende 25 aufweist zum Ein- und Durchführen des vorderen Spannzangenendes 22 in das hintere Spannzangengehäuseende 25 (wie z.B. in den Fig. 1, 2, 3 4a-4C, 5, 6A-6D und 7 gezeigt), und wobei die Spannzange 3A durch das Spannzangengehäuse 3B hindurchführbar und mit ihren Spannbacken 16 aus dessen vorderen Spannzangengehäuseende 22 herausführbar und mittels der Klemmfläche 17 des Spanngehäuses 3B klemmbar ist (wie z.B. in den Fig. 1, 2, 3 4a-4C, 5, 6A-6D und 7 gezeigt), wobei die Spannzange 3A vorzugsweise eine Stromaufnahmekontaktfläche 18 aufweist insbesondere zum Kontaktieren und zum zentrierten Halten einer in der Spannzange 3A aufnehmbaren Schweißelektrode, insbesondere stabförmigen Schweißelektrode 2, und wobei die Spannzange 3A an ihrem vorderen Spannzangenende 22 vorzugsweise eine zusätzlich Schweißelektroden-Aufnahmekontur 27 (wie in den Fig. 4A, 4C, 6A-6D und nachfolgender Fig. 7 gezeigt ist) aufweist zum Aufnehmen einer stabförmigen Schwei-βelektrode 2 in der Spannzange 3A und insbesondere eines stumpfen Endes einer stabförmigen Schweißelektrode 2.

In Fig. 7 ist ein Ausschnitt eines Ausführungsbeispiels des Schweißbrenners 1 gezeigt, welcher sich von dem Schweißbrenner 1 in Fig. 1 im Wesentlichen durch die eingesetzte Spannzange 3A und das Spannzangengehäuse 3B unterschiedet.

Der Bereich oder Teil der Spannzange 3A und des Spannzangengehäuse 3B der mit einem gestrichelten Kreis umgeben ist, entspricht der Spannzange 3A und dem Spannzangengehäuse 3B, wie es in den Fig. 4A, 4C und insbesondere den Fig. 6A-6D gezeigt und beschrieben ist. Daher werden gleiche Bezugszeichen verwendet und auf die Beschreibung hierzu mit Bezug auf die Fig. 4A, 4C und Fig. 6A-6D verwiesen, um unnötige Wiederholungen zu vermeiden. Der erste und zweite Öffnungswinkel α und β sind in Fig. 7 dabei aus Gründen der Übersichtlichkeit nicht eingezeichnet.

Das Spannzangengehäuse 3B in Fig. 7, weist, wie das Spannzangengehäuse 3B zuvor in Fig. 1, eine Durchgangsöffnung 29, insbesondere eine abgestufte Durchgangsbohrung, in Längsrichtung auf, deren Durchmesser von dem hinteren Spannzangengehäuseende 25 zu dem vorderen Spannzangengehäuseende 24 abnimmt, insbesondere stufenweise abnimmt. Wenigstens eine, mehrere oder alle dieser Stufen oder Abstufungen in dem Spannzangengehäuse 3B können zusätzlich abgeschrägt oder sich trichterförmig oder konisch verjüngend in Richtung des vorderen Spannzangengehäuseendes 24 ausgebildet sein, um so Spannzangen-Aufnahmekonturen bereitzustellen, die ein leichteres Einfädeln und Durchführen der Spannzange 3A durch das Spannzangengehäuse 3B ermöglichen.

Des Weiteren weist der Schweißbrenner 1, wie in Fig. 7 gezeigt ist, wie zuvor der Schweißbrenner in Fig. 1, die Zuführleitung 6, den Isolierring 7, den Innenzylinder 9, das Schweißbrennergehäuse 12 und den Gummimantel 13 usw. auf. Der Teil des Schweißbrenners 1 mit dem Außenzylinder, der Druckfeder, dem Druckfederanschlag ist in dem Ausschnitt in Fig. 7 im Gegensatz zu Fig. 1 nicht dargestellt.

### BEZUGSZEICHENLISTE

- 1: Schweißbrenner
- 2: Schweißelektrode
- 2A: Spitze der stabförmigen Schweißelektrode
- 3: Elektrodenspannvorrichtung
- 3A: Spannzange
- 3B: Spannzangengehäuse
- 4: Radialbohrungen
- 5: Schutzgasdüse
- 6: Zuführleitungen
- 7: Isolierring
- 8: Druckkappe
- 9: Innenzylinder
- 10: Außenzylinder
- 11: Gehäusemantel
- 12: Schweißbrennergehäuse
- 13: Gummimantel
- 14: Druckfeder
- 15: Druckfederanschlag
- 16: Spannbacken
- 17: Anpressfläche
- 18: erste Stromkontaktfläche
- 19: zweite Stromkontaktfläche
- 20: Schlitze
- 21: Flachfräsungen
- 22: vorderes Spannzangenende
- 23: hinteres Spannzangenende
- 24: vorderes Spannzangengehäuseende
- 25: hinteres Spannzangengehäuseende
- 26: Vorsprung
- 27: Schweißelektroden-Aufnahmekontur
- 28: erste Spannzangen-Aufnahmekontur
- 29: Durchgangsöffnung (Durchgangsbohrung)
- 30: zweite Spannzangen-Aufnahmekontur
- 31: dritte Spannzangen-Aufnahmekontur
- 32: stumpfes Ende der Schweißelektrode
- 33: vorderer Spannbackenabschnitt
- 34: hinterer Spannbackenabschnitt
- 35: vorderer konischer Abschnitt
- 36: hinterer konischer Abschnitt
- 37: Spitze

## Patentansprüche

1. Elektrodenspannvorrichtung (3) zum mechanischen Einspannen einer nicht abschmelzenden stabförmigen Schweißelektrode (2) in einem Schweißbrenner (1), wobei die Elektrodenspannvorrichtung (3) eine Spannzange (3A) aufweist, welche in den Schweißbrenner (1) in ein die Spannzange (3A) umschließendes Spannzangengehäuse (3B) der Elektrodenspannvorrichtung (3) montiert ist, wobei die Spannzange (3A) relativ zu dem sie umschließenden Spannzangengehäuse (3B) zum mechanischen Festklemmen und Lösen der stabförmigen Schweißelektrode (2) entlang der Längsachse der stabförmigen Schweißelektrode (2) beweglich angeordnet ist, **dadurch gekennzeichnet, dass** die Spannzange in den Schweißbrenner von hinten in das Spannzangengehäuse montiert ist.

2. Elektrodenspannvorrichtung nach Anspruch 1,
wobei die Spannzange (3A) in Längsrichtung ein vorderes Spannzangenende (22) mit Spannbacken (16) und ein hinteres Spannzangenende (23) aufweist, und
wobei das Spannzangengehäuse (3B) in Längsrichtung ein vorderes Spannzangengehäuseende (24) und ein hinteres Spannzangengehäuseende (25) aufweist zum Ein- und Durchführen des vorderen Spannzangenendes (22) in das hintere Spannzangengehäuseende (25), und
wobei die Spannzange (3A) mit ihrem vorderen Spannzangenende (22) in das hintere Spannzangengehäuseende (25) ein hindurchführbar ist, wobei die Spannzange (3A) an ihrem vorderen Spannzangenende (22) vorzugsweise eine zusätzlich Schweißelektroden-Aufnahmekontur (27) aufweist zum Aufnehmen einer stabförmigen Schweißelektrode (2) in der Spannzange (3A), und/oder
wobei das die Spannzange (3A) umschließende Spannzangengehäuse (3B) eine Aufnahmekontur (28, 30, 31) aufweist, derart dass die Spannzange (3A) von hinten durch die Aufnahmekontur (28, 30, 31) des Spannzangengehäuses (3B) einschiebbar ist.

3. Elektrodenspannvorrichtung nach Anspruch 1 oder 2, wobei die Spannzange (3A) an ihrem vorderen Endabschnitt an ihrem vorderen Spannzangenende (22) mehrere radial angeordnete und durch Schlitze (20) getrennte sowie sich radial und/oder axial verbreiternde Spannbacken (16) aufweist, die durch eine innenliegende Klemm- und Stromkontaktfläche des umschließenden Spannzangengehäuses (3B) an dem vorderen Spannzangengehäuseende (24) zum zentrierten Halten der in die Spannzange (3A) eingeführten stabförmigen Schweißelektrode (2) zusammengepresst werden, sobald die Spannzange (3A) relativ zu dem sie umschließenden Spannzangengehäuse (3B) nach hinten bewegt wird.

4. Elektrodenspannvorrichtung nach Anspruch 2 oder 3, wobei die Spannzange (3A) relativ zu dem sie umschließenden Spannzangengehäuse (3B) durch einen Federmechanismus der Elektrodenspannvorrichtung (3) bewegt wird.

5. Elektrodenspannvorrichtung nach Anspruch 2, 3 oder 4, wobei die Spannbacken (16) der Spannzange (3A) Flachfräsungen (21) zur Spannkraftoptimierung aufweisen.

6. Elektrodenspannvorrichtung nach einem der vorangehenden Ansprüche,
wobei die an dem vorderen Endabschnitt der Spannzange (3A) vorgesehenen sich radial und/oder axial verbreiternden Spannbacken (16) einen vorgegebenen ersten Öffnungswinkel, α, aufweisen, und/oder
wobei das Spannzangengehäuse (3B) an einem vorderen Endabschnitt eine Anpressfläche (17) mit einem zweiten Öffnungswinkel, β, aufweist.

7. Elektrodenspannvorrichtung nach Anspruch 5,
wobei der erste Öffnungswinkel, α, der Spannzange (3A) gleich oder größer ist als der zweite Öffnungswinkel, β, des umschließenden Spannzangengehäuses (3B),
wobei der erste Öffnungswinkel, α, in einem Winkelbereich von 20 bis 90° liegt und vorzugsweise 20° oder 35° beträgt, und
wobei der zweite Öffnungswinkel, β, in einem Winkelbereich von 0° bis 90° liegt und vorzugsweise 20° oder 30° beträgt.

8. Elektrodenspannvorrichtung nach einem der vorangehenden Ansprüche 4 bis 7,
wobei die entlang der Längsachse der stabförmigen Schwei-βelektrode (2) beweglich angeordnete Spannzange (3A) mit einer an einer Rückseite des Schweißbrenners (1) vorgesehenen manuell betätigbaren Druckkappe (8) verbunden ist, welche den Federmechanismus der Elektrodenspannvorrichtung (3) umschließt.

9. Elektrodenspannvorrichtung nach einem der vorangehenden Ansprüche,
wobei das Spannzangengehäuse (3B) Radialbohrungen (4) aufweist, durch welche ein dem Schweißbrenner (1) zugeführtes Schutzgas in eine die Schweißelektrode (2) umschließende Gasdüse (5) abgegeben wird.

10. Elektrodenspannvorrichtung nach einem der vorangehenden Ansprüche,
wobei die an dem vorderen Endabschnitt des Spannzangengehäuses (3B) vorgesehene Anpressfläche (17) einen Radius aufweist, der in einem Bereich von 0 bis 1 mm liegt und vorzugsweise 0,1 mm beträgt.

11. Elektrodenspannvorrichtung nach einem der vorangehenden Ansprüche 1 bis 10,
wobei die Oberfläche der Spannzange (3A) und/oder des Spannzangengehäuses (3B) durch eine stromleitende Oxidationsschutzschicht zum Schutz vor Oxidation und zum Schutz vor Verschleiß umschlossen ist,
wobei die stromleitende Oxidationsschutzschicht vorzugsweise aus Silber oder Nickel besteht oder eine Hochtemperatur-Gleitlackbeschichtung aufweist, und/oder wobei das Material der Spannzange (3A) aus einer Kupferlegierung besteht.

12. Elektrodenspannvorrichtung nach einem der vorangehenden Ansprüche 1 bis 11,
wobei an einem Gehäusemantel (11) des Schweißbrenners (1) Zusatzkomponenten, insbesondere eine Kaltdraht- oder Heißdrahtzuführeinheit, montierbar sind.

13. Elektrodenspannvorrichtung nach einem der vorangehenden Ansprüche 1 bis 12,
wobei eine erste Stromkontaktfläche (18) zwischen der stabförmigen Schweißelektrode (2) und der Spannzange(3A) und
eine zweite Stromkontaktfläche (19) zwischen der Spannzange (3A) und dem Spannzangengehäuse (3B) axial versetzt zueinander angeordnet sind.

14. Elektrodenspannvorrichtung nach einem der vorangehenden Ansprüche 2 bis 13,
wobei die Schlitze (20) der Spannzange (3A) eine Schlitzlänge von 10 bis 20 mm, insbesondere 14 mm, aufweisen und/oder die Schlitze (20) eine Schlitzbreite (SB) in einer Bereich von 0,5mm bis 1mm und vorzugsweise in einem Bereich von 0,6 bis 0,8mm aufweisen und/oder wenigstens 3 bis 4 Schlitze (20) vorgesehen sind.

15. Schweißbrenner (1), wobei der Schweißbrenner (1) eine nicht abschmelzbare stabförmige Schweißelektrode (2) mit einer Spitze (2A) aufweist, wobei die Spitze (2A) der Schweißelektrode (2) an einer vorderen Seite des Schweißbrenners (1) vorgesehen ist und wobei der Schweißbrenner (1) eine Elektrodenspannvorrichtung (3) gemäß einem der vorangehenden Ansprüche 1 bis 14 aufweist zum mechanischen Einspannen der nicht abschmelzenden stabförmigen Schweißelektrode (2) in den Schweißbrenner (1).

## Claims

1. Electrode clamping device (3) for mechanically clamping a non-consumable rod-shaped welding electrode (2) in a welding torch (1),
the electrode clamping device (3) having clamping tongs (3A) which are mounted in the welding torch (1) in a clamping tongs housing (3B), enclosing the clamping tongs (3A), of the electrode clamping device (3), the clamping tongs (3A) being arranged movable along the longitudinal axis of the rod-shaped welding electrode (2), relative to the clamping tongs housing (3B) enclosing them, for mechanically gripping and releasing the rod-shaped welding electrode (2), **characterised in that** the clamping tongs are mounted in the welding torch from the rear in the clamping tongs housing.

2. Electrode clamping device according to claim 1,
wherein the clamping tongs (3A) have, in the longitudinal direction, a front clamping tongs end (22) with clamping jaws (16) and a rear clamping tongs end (23), and
wherein the clamping tongs housing (3B) has, in the longitudinal direction, a front clamping tongs housing end (24) and a rear clamping tongs housing end (25) for passing the front clamping tongs end (22) in and through into the rear clamping tongs housing end (25), and
wherein the front clamping tongs end (22) of the clamping tongs (3A) can be guided through into the rear clamping tongs housing end (25), the clamping tongs (3A) preferably having, on the front clamping tongs end (22) thereof, an additional welding electrode receiving contour (27) for receiving a rod-shaped welding electrode (2) in the clamping tongs (3A), and/or
wherein the clamping tongs housing (3B) enclosing the clamping tongs (3A) has a receiving contour (28, 30, 31) in such a way that the clamping tongs (3A) can be slid in from the rear through the receiving contour (28, 30, 31) of the clamping tongs housing (3B).

3. Electrode clamping device according to either claim 1 or claim 2, wherein the clamping tongs (3A) have, at the front end portion thereof at the front clamping tongs end (22) thereof, a plurality of radially arranged clamping jaws (16), which are separated by slits (20), spread radially and/or axially, and are pressed together by an internal clamping and electrical contact face of the enclosing clamping tongs housing (3B) at the front clamping tongs housing end (24), to hold the rod-shaped welding electrode (2) introduced into the clamping tongs (3A) centred, as soon as the clamping tongs (3A) are moved rearwards relative to the clamping tongs housing (3B) enclosing them.

4. Electrode clamping device according to either claim 2 or claim 3,
wherein the clamping tongs (3A) are moved relative to the clamping tongs housing (3B) enclosing them by a spring mechanism of the electrode clamping device (3).

5. Electrode clamping device according to claim 2, 3 or 4, wherein the clamping jaws (16) of the clamping tongs (3A) have flat millings (21) for clamping force optimisation.

6. Electrode clamping device according to any of the preceding claims,
wherein the radially and/or axially spreading clamping jaws (16) provided at the front end portion of the clamping tongs (3A) have a predetermined first opening angle, α, and/or
wherein the clamping tongs housing (3B) has, at a front end, a press-on face (17) having a second opening angle, β.

7. Electrode clamping device according to claim 5,
wherein the first opening angle, α, of the clamping tongs (3A) is greater than or equal to the second opening angle, β, of the enclosing clamping tongs housing (3B),
wherein the first opening angle, α, is in an angular range of 20 to 90° and is preferably 20° or 35°, and
wherein the second opening angle, β, is in an angular range of 0° to 90° and is preferably 20° or 30°.

8. Electrode clamping device according to any of preceding claims 4 to 7,
wherein the clamping tongs (3A), arranged movable along the longitudinal axis of the rod-shaped welding electrode (2), are connected to a manually actuable pressure cap (8), which is provided on a rear face of the welding torch (1) and encloses the spring mechanism of the electrode clamping device (3).

9. Electrode clamping device according to any of the preceding claims,
wherein the clamping tongs housing (3B) has radial holes (4) through which a shielding gas supplied to the welding torch (1) is delivered into a gas nozzle (5) enclosing the welding electrode (2).

10. Electrode clamping device according to any of the preceding claims,
wherein the press-on face (17) provided on the front end portion of the clamping tongs housing (3B) has a radius which is in a range of 0 to 1 mm and is preferably 0.1 mm.

11. Electrode clamping device according to any of preceding claims 1 to 10,
wherein the surface of the clamping tongs (3A) and/or of the clamping tongs housing (3B) is enclosed by a current-carrying oxidation protection layer for protection from oxidation and for protection from wear,
wherein the current-carrying oxidation protection layer preferably consists of silver or nickel or has a hightemperature glide coating, and/or
wherein the material of the clamping tongs (3A) consists of a copper alloy.

12. Electrode clamping device according to any of preceding claims 1 to 11,
wherein additional components, in particular a cold wire or hot wire supply unit, can be mounted on a housing casing (11) of the welding torch (1).

13. Electrode clamping device according to any of preceding claims 1 to 12,
wherein a first electrical contact face (18), between the rod-shaped welding electrode (2) and the clamping tongs (3A), and
a second electrical contact face (19), between the clamping tongs (3A) and the clamping tongs housing (3B), are arranged mutually axially offset.

14. Electrode clamping device according to any of preceding claims 2 to 13,
wherein the slits (20) in the clamping tongs (3A) have a slit length of 10 to 20 mm, in particular 14 mm, and/or the slits (20) have a slit width (SB) in a range of 0.5 mm to 1 mm and preferably in a range of 0.6 to 0.8 mm, and/or at least 3 to 4 slits (20) are provided.

15. Welding torch (1), wherein the welding torch (1) has a non-consumable rod-shaped welding electrode (2) with a tip (2A), wherein the tip (2A) of the welding electrode (2) is provided on a front face of the welding torch (1), and wherein the welding torch (1) has an electrode clamping device (3) according to any of preceding claims 1 to 14 for mechanically clamping the non-consumable rod-shaped welding electrode (2) in the welding torch (1).

## Revendications

1. Dispositif de serrage d'électrode (3) pour le serrage mécanique d'une électrode de soudage en forme de baguette non consommable (2) dans un chalumeau de soudage (1), dans lequel le dispositif de serrage d'électrode (3) comprend une pince de serrage (3A) qui est montée dans le chalumeau de soudage (1) dans un boîtier de pince de serrage (3B) du dispositif de serrage d'électrode (3) entourant la pince de serrage (3A), dans lequel la pince de serrage (3A) est agencée de manière mobile par rapport au boîtier de pince de serrage (3B) l'entourant pour serrer mécaniquement et desserrer l'électrode de soudage en forme de baguette (2) le long de l'axe longitudinal de l'électrode de soudage (2) en forme de baguette, **caractérisé en ce que** la pince de serrage est montée dans le chalumeau de soudage depuis l'arrière dans le boîtier de pince de serrage.

2. Dispositif de serrage d'électrode selon la revendication 1,
dans lequel la pince de serrage (3A) comprend, dans la direction longitudinale, une extrémité avant de pince de serrage (22) avec des mâchoires de serrage (16) et une extrémité arrière de pince de serrage (23), et
dans lequel le boîtier de pince de serrage (3B) comprend, dans la direction longitudinale, une extrémité avant de boîtier de pince de serrage (24) et une extrémité arrière de boîtier de pince de serrage (25) pour insérer l'extrémité avant de pince de serrage (22) dans l'extrémité arrière de boîtier de pince de serrage (25) et la guider à travers celle-ci, et
dans lequel la pince de serrage (3A) peut être guidée avec son extrémité avant de pince de serrage (22) dans l'extrémité arrière de pince de serrage (25), dans lequel la pince de serrage (3A) a de préférence, sur son extrémité avant de pince de serrage (22), un contour supplémentaire de réception d'électrode de soudage (27) pour recevoir une électrode de soudage en forme de baguette (2) dans la pince de serrage (3A), et/ou
dans lequel le boîtier de pince de serrage (3B) entourant la pince de serrage (3A) a un contour de réception (28, 30, 31), de telle sorte que la pince de serrage (3A) peut être poussée par l'arrière à travers le contour de réception (28, 30, 31) du boîtier de pince de serrage (3B).

3. Dispositif de serrage d'électrode selon la revendication 1 ou 2,
dans lequel la pince de serrage (3A) comprend, sur sa partie d'extrémité avant, au niveau de son extrémité avant de pince de serrage (22), plusieurs mâchoires de serrage (16) agencées radialement et séparées par des fentes (20) et qui s'élargissent radialement et/ou axialement, lesquelles mâchoires de serrage sont comprimées par une surface de serrage et de contact de courant interne du boîtier de pince de serrage (3B) l'entourant sur l'extrémité avant de boîtier de pince (24) pour maintenir centrée l'électrode de soudage en forme de baguette (2) introduite dans la pince de serrage (3A), dès que la pince de serrage (3A) est déplacée en arrière par rapport au boîtier de pince de serrage (3B) qui l'entoure.

4. Dispositif de serrage d'électrode selon la revendication 2 ou 3,
dans lequel la pince de serrage (3A) est déplacée par rapport au boîtier de pince de serrage (3B) qui l'entoure par un mécanisme à ressort du dispositif de serrage d'électrode (3).

5. Dispositif de serrage d'électrode selon la revendication 2, 3 ou 4,
dans lequel les mâchoires de serrage (16) de la pince de serrage (3A) comprennent des méplats fraisés (21) pour optimiser la force de serrage.

6. Dispositif de serrage d'électrode selon l'une des revendications précédentes,
dans lequel les mâchoires de serrage (16) s'élargissant radialement et/ou axialement prévues sur la partie d'extrémité avant de la pince de serrage (3A) ont un premier angle d'ouverture, α, prédéterminé et/ou
dans lequel le boîtier de pince de serrage (3B) a, sur une partie d'extrémité avant, une surface de pression (17) ayant un second angle d'ouverture, β.

7. Dispositif de serrage d'électrode selon la revendication 5,
dans lequel le premier angle d'ouverture, α, de la pince de serrage (3A) est égal ou supérieur au second angle d'ouverture, β, du boîtier de pince de serrage (3B) qui l'entoure,
dans lequel le premier angle d'ouverture, α, est dans une plage angulaire de 20° à 90° et de préférence égal à 20° ou 35°, et
dans lequel le second angle d'ouverture, β, est dans une plage angulaire de 0° à 90° et de préférence égal à 20° ou 30°.

8. Dispositif de serrage d'électrode selon l'une des revendications 4 à 7 précédentes,
dans lequel la pince de serrage (3A) agencée de manière mobile le long de l'axe longitudinal de l'électrode de soudage en forme de baguette (2) est reliée à une coiffe de pression (8) pouvant être actionnée manuellement et prévue sur un côté arrière du chalumeau de soudage (1), laquelle coiffe de pression entoure le mécanisme à ressort du dispositif de serrage d'électrode (3).

9. Dispositif de serrage d'électrode selon l'une des revendications précédentes,
dans lequel le boîtier de pince de serrage (3B) comprend des alésages radiaux (4) à travers lesquels un gaz protecteur fourni au chalumeau de soudage (1) est évacué dans une buse de gaz (5) entourant l'électrode de soudage (2) .

10. Dispositif de serrage d'électrode selon l'une des revendications précédentes,
dans lequel la surface de pression (17) prévue sur la partie d'extrémité avant du boîtier de pince de serrage (3B) a un rayon qui est dans une plage de 0 à 1 mm et de préférence égal à 0,1 mm.

11. Dispositif de serrage d'électrode selon l'une des revendications 1 à 10 précédentes,
dans lequel la surface de la pince de serrage (3A) et/ou du boîtier de pince de serrage (3B) est entourée d'une couche de protection contre l'oxydation conductrice de courant pour protéger contre l'oxydation et l'usure,
dans lequel la couche de protection contre l'oxydation conductrice de courant est de préférence constituée d'argent ou de nickel ou comprend un revêtement de vernis glissant à haute température, et/ou
dans lequel le matériau de la pince de serrage (3A) est constitué d'un alliage de cuivre.

12. Dispositif de serrage d'électrode selon l'une des revendications 1 à 11 précédentes,
dans lequel des composants supplémentaires, en particulier une unité d'alimentation en fil froid ou en fil chaud, peuvent être montés sur une enveloppe de boîtier (11) du chalumeau de soudage (1).

13. Dispositif de serrage d'électrode selon l'une des revendications 1 à 12 précédentes,
dans lequel une première surface de contact de courant (18) entre l'électrode de soudage en forme de baguette (2) et la pince de serrage (3A) et
une seconde surface de contact de courant (19) entre la pince de serrage (3A) et le boîtier de pince de serrage (3B) sont agencées de manière axialement décalée l'une par rapport à l'autre.

14. Dispositif de serrage d'électrode selon l'une des revendications 2 à 13 précédentes,
dans lequel les fentes (20) de la pince de serrage (3A) ont une longueur de fente de 10 à 20 mm, en particulier de 14 mm, et/ou les fentes (20) ont une largeur de fente (SB) dans une plage de 0,5 mm à 1 mm et de préférence dans une plage de 0,6 à 0,8 mm, et/ou au moins 3 à 4 fentes (20) sont prévues.

15. Chalumeau de soudage (1), dans lequel le chalumeau de soudage (1) comprend une électrode de soudage en forme de baguette (2) non consommable avec une pointe (2A), dans lequel la pointe (2A) de l'électrode de soudage (2) est prévue sur un côté avant du chalumeau de soudage (2) et dans lequel le chalumeau de soudage (1) comprend un dispositif de serrage d'électrode (3) selon l'une des revendications 1 à 14 précédentes pour le serrage mécanique de l'électrode de soudage en forme de baguette non consommable (2) dans le chalumeau de soudage (1).
